# EUROPEAN PATENT SPECIFICATION

(11) **EP 1 483 560 B1**
(45) Date of publication and mention of the grant of the patent: **23.12.2009**
(21) Application number: 02803578.0
(22) Date of filing: 20.11.2002
(51) Int. Cl.: G01M 11/06

(54) **A METHOD AND A SYSTEM FOR TESTING LIGHT THE ALIGNMENT OF VEHICLE HEADLIGHTS**
VERFAHREN UND SYSTEM ZUM PRÜFEN VON LICHT DER AUSRICHTUNG VON FAHRZEUGSCHEINWERFERN
PROCEDE ET SYSTEME DE TEST DE L'ECLAIREMENT ET DU REGLAGE DE PHARES D'AUTOMOBILE

(30) Priority: 23.11.2001 PL 35083501
(43) Date of publication of application: 08.12.2004
(73) Proprietor: Instytut Transportu Samochodowego, 03-301 Warszawa (PL); Targosinski, Tomasz, 02-799 Warszawa (PL); Lowicki, Jan, 01-785 Warszawa (PL); Damm, Andrzej, 03-454 Warszawa (PL)
(72) Inventor: TARGOSINSKI, Tomasz, PL-02-799 Warszawa (PL); LOWICKI, Jan, PL-01-785 Warszawa (PL); DAMM, Andrzej, PL-03-454 Warszawa (PL)
(86) International application number: PCT/PL2002/000090
(87) International publication number: WO 2003/044480

(56) References cited:
- GB-A- 2 292 604
- PATENT ABSTRACTS OF JAPAN vol. 016, no. 211 (P-1355), 19 May 1992 (1992-05-19) & JP 04 038436 A (HAMAMATSU PHOTONICS KK), 7 February 1992 (1992-02-07)

## Description

The matter of an invention is a method for testing light properties and aiming vehicle headlights.

The invention serves for investigation and estimation of lighting proprieties of vehicle headlights, especially in a range of luminous intensity distribution and distribution of illumination, and also for control the adjustment of headlamps on a vehicle. The invention has an application in the factories of cars and of car headlamps as well as in the stations for control of vehicles and in car-repairing workshops.

From a practice there is well-known method for testing light proprieties and aiming car headlamps, wherein a light stream coming out of the headlamp being tested is projecting indirectly - by an optical system serving for diminishing of a picture and shortening a distance of observation - on a screen, on which there is made a visible observation of the distribution of illumination obtained image as well as the location of the hot spot and the cut-off line. Then, using a photoelectric detector serving as a converter of lighting equals to electric equals, there is measured a light intensity on a screen surface in several defined points. The results of observation and measurements are finally compared with the requirements of accepted reference standards and on this basis there is estimated the light quality of controlled headlamp and its arrangement on a vehicle.

From the UK Patent Application No GB 2 292 604 there is known a method, wherein the light beam coming out of the headlight being tested is projected on a transparent screen, giving an optical image. The luminance distribution of that image is converted, by CCD camera, into electrical signals of the qualities of a vision signals, which are then subject of electronic processing and transforming into two-dimensional distribution of illumination or into two-dimensional distribution of luminous intensity of the light of the headlight. From the such distributions of illumination or luminous intensity, by very complicated manner, including geometrical and mathematical methods, first a real and then a linear shape and a location of cut-off line is determined.

The main disadvantage of the first described methods is that for the measure of the illumination a simple photoelectric detector is used. It enables only a one-point measure of said illumination, what does not reflect the real light features coming out of headlamp being tested. Moreover, a visible estimation of the luminance distributions of an image, as well as the location of a hot spot and a cut-off line on a screen is not error-free, due to the unsatisfactorily accuracy of human eye and a subjective estimation of the results by an observer. The disadvantage of the second described method is their complicity.

A method according to the invention does not possess these disadvantages.

The matter of a method according to the invention depends on that that the operation of conversion of the optical image into distributions of illumination or luminous intensity is being repeated, each time with an another sensitivity of an image converter, until satisfied relative resolution of the illumination or luminous intensity all over the screen area is achieved, and the new fragments of such obtained distributions with accepted resolutions are being put together. Then from the such completed distributions of illumination or luminous intensity, first mathematically a real (irregular) shape and then by approximation, a two-segment broken line shape and, a location of cut-off line is determined, or else the real location of a hot spot. The mathematical determination of the real cut-off line consists in calculating the maximums of derivatives from the logarithmic functions of illumination or luminous intensity, along the vertical co-ordinate, in subsequent adjoining vertical cross-sections of the said screen or vertical cross-sections of the solid angle of the light beam of the said headlight and fixing the points of location of the maximums from which afterwards the cut-off line is delineated. The approximation of the real shape of the said cut-off line to the required two-segment shape of broken-line is carried out through averaging the vertical co-ordinates of the points of the real cut-off line to a horizontal segment and an oblique segment, and further through iterationaly selecting of these points and averaging the vertical co-ordinates of the selected points until the location of the sections being averaged does not adopt new values anymore. The selecting of the points is being made in accordance with the criterion of their vertical distance from the sections averaged. There is preferably, when the correctness of the shape of the real cut-off line is evaluated in accordance with the criterion of its percentage share in accepted tolerance field limited by two strict-lines which are parallel to the approximated cut-off line. There is also preferably when the location of a hot spot is determined either on the basis of the location of the centre of a rectangle formed by four lines tangent to the isolux line of distribution of illumination or else to the isocandela line of luminous intensity, or on the basis of the geometrical centre of a figure formed by said isolux or isocandela.

The solution according to the invention permits to obtain the real distribution of lighting intensity of light beam emitted by investigated source of light, what in effect makes it possible to perform the objective and precise measurements and estimations of light parameters of the tested headlights. Practical application of the invention to control of car headlights in process of their manufacturing enables for quickly identification of their state and selection of the defective ones. In the vehicle control stations the invention permits for precise estimation and aiming of headlights directly on a vehicle. A method and system according to the invention can also be used for testing the headlights with the lights of an adaptation type. The method can be realised basing on the systems for adjustment of vehicle headlamps, known from prior of art, using a CCD camera and electronic converters.

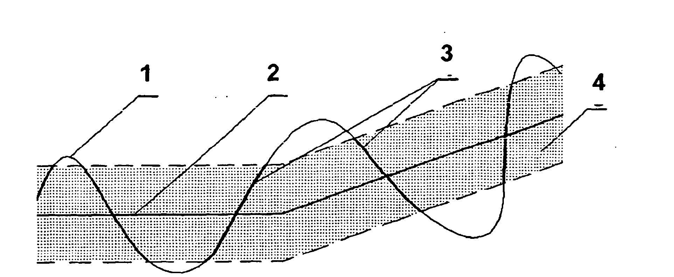

The invention will become closer explained on the enclosed drawing, which introduces schematically an idea of transforming the real cut-off line into the two-segment straight- line.

An optical image created on the screen, that is the distribution of its luminance, is transported into an analysing vision converter of CCD type, in which the luminance distribution of said image is transformed into the electrical signals of the qualities of vision signals, which are then transported into the electronic system, in which the vision signals are transformed into the two-dimensional distribution of illumination or into the two-dimensional distribution of luminous intensity of the light of the headlight. If oneself does not obtain distribution of required relative resolution of luminous intensity values or of illumination values on the all area of a screen but only on its fragments, the operation of transforming of optical image is being repeated, each time with an another sensitivity of converter, until satisfied resolution is achieved, and such obtained new fragments of said image with required sensitivity are being put together, until all the image is set. From such obtained final light distributions, using an electronic system, a real cut-off line **1** is determined. This line is determined from derivatives of logarithmic functions of luminous intensity or illumination values of headlight, calculating their maximums of said derivatives along the vertical co-ordinate, in subsequent adjoining vertical cross-sections of the screen or vertical cross-sections of the solid angle of the light beam of the headlight and fixing the points of location of the maximums. Afterwards, there is made an approximation of the shape of the real cut-off line **1** to the shape of a two-segment broken line **2**. This approximation is carried out in this manner, that first the vertical co-ordinates of the points of the real of cut-off line **1** are mathematically averaged to a horizontal and an oblique segments **2**, and then from said real cut-off line **1** there are selected, on the basis of the criterion of their vertical distance from the averaged sections, the points **3** lying in arbitrarily accepted field of tolerance **4**, and then such selected points **3** are averaged again. The process of selecting and averaging is being repeated iterationally until the locations of the segments **2** being averaged do not adopt the new values anymore. An image and an estimation of the real **1** and the approximated **2** cut-off lines can be perceived by computer peripheral output devices. The approximated cut-off line **2** is recognised for correct, when at least a definite percentage share of length the real cut off-line **1** is included in the sections being found in the field of tolerance **4** which is limited by two lines parallel to approximated cut-off line **2.**

The results obtained by described method are compared with the recognised industrial or government reference standards for testing of headlights, and on that basis the light quality of controlled headlamp and its aiming on a vehicle are estimated.

## Claims

1. A method for testing light properties and aiming vehicle headlights, in which the light beam coming out of the headlight being tested is projected on a screen, giving an optical image with a visible hot spot and a visible cut-off line, where the luminance distribution of the optical image obtained on the said screen is converted into electrical signals of the qualities of a vision signal which are then subject to electronic processing and transformed into two-dimensional distribution of illumination or into two-dimensional distribution of luminous intensity of the light of the headlight, and then from the such distributions of illumination or luminous intensity, first a real and then a linear shape and a location of cut-off line is determined, or else the real location of a hot spot, and finally such achieved results are compared with the shape and locations of the recognised reference standards, **characterised in that** the operation of conversion of the optical image into distributions of illumination or luminous intensity is being repeated with the sensitivity of an image converter each time being changed, until a required relative resolution of the illumination or luminous intensity all over the screen area is achieved, and the new fragments of such obtained distributions with accepted relative resolutions are being put together, and then from the such completed distributions of illumination or luminous intensity, first mathematically a real **(1)**, and then by approximation, a two-segment broken line **(2)** shape, and a location of cut-off line is determined, or else the real location of a hot spot, where the mathematical determination of the real cut-off line consists in calculating the maximums of derivatives from the logarithmic functions of illumination or luminous intensity, along the vertical co-ordinate, in subsequent adjoining vertical cross-sections of the said screen or vertical cross-sections of the solid angle of the light beam of the said headlight and fixing the points of location of the maximums from which afterwards the cut-off line is delineated, and where the approximation of the real shape of the said cut-off-line **(1)** to the required shape of a two-segment broken line **(2)** is carried out through averaging the vertical co-ordinates of the points **(1)** of the real cut-off line to a horizontal segment and an oblique segment and then through iteration, selecting of these points and averaging the vertical co-ordinates of the points **(3)** selected until the location of the sections being averaged does not adopt new values anymore, and that the selecting of the points **(3)** is being made in accordance with the criterion of their vertical distance from the sections averaged.

2. A method, according to Claim 1, **characterised in that** the correctness of the shape of the real cut-off line **(1)** is evaluated in accordance with the criterion of its percentage share in a tolerance field **(4)** accepted which is limited by two lines parallel to the approximated cut-off line **(2)**.

3. A method, according to Claim 1, **characterised in that** the location of the said hot spot is determined either on the basis of the position of the centre of a rectangular formed by four lines tangent to the isolux line of distribution of illumination or else to the isocandela line of luminous intensity, or on the basis of the geometrical centre of a figure formed by said isolux or isocandela.

## Patentansprüche

1. Eine Art und Weise der Prüfung von Lichteigenschaften und der Einstellung von Lichter des Autoreflektors, in dem das Lichtbündel, das aus dem untersuchten Reflektor ausgehet, wird durch das optische System auf den Schirm geworfen, ein optisches Bild mit einem Lichtfleck und Licht- und Schattengrenze gewinnend, wo eine Luminanzverteilung des auf dem Schirm erlangten optischen Bildes wird in elektrische Signale mit Eigenschaften des Videosignals, die nachfolgend einer elektronischen Bearbeitung unterliegen und in eine zweidimensionale Beleuchtungsstärke oder in zweidimensionale Verteilung des Lichtes des Reflektors umgewandelt werden, wonach aus der auf solche Weise erlangten Beleuchtungsstärke oder der Helligkeit zuerst wahre Gestalt und dann Liniengestalt und eine Lage der Licht- und Schattengrenze oder wahre Lage des Lichtflecks mathematisch bestimmt werden, und die erzielten Ergebnisse mit der Gestalt und Lage der festgesetzten Mustern verglichen werden, die Gestalt **dadurch kennengezeichnet, dass** die Umwandlungsoperation des optischen Bildes in Verteilungen der Beleuchtungsstärke und der Helligkeit iterationsweise wiederholt wird, indem jeweils eine Empfindlichkeit des Bildwandlers geändert wird und die erlangten Verteilungsfragmente von erforderliches relatives Auflösungsvermögen zusammengestellt werden bis ein erforderliches relatives Auflösungsvermögen des Beleuchtungsstärkenwertes oder der Helligkeit auf dem ganzen Schirm erzielt wird, und aus den auf diese Art und Weise erlangten Verteilungen der Beleuchtungsstärke und der Helligkeit werden zuerst auf mathematische Weise eine reele (**1**), und ferner durch eine Approximation eine Zweiabschnitts- (**2**) eine Licht- und Schattengrenze und ein wahrer Platz eines dunklen Flecks bestimmt, wobei eine mathematische Bestimmung der wahren Licht- und Schattengrenze beruht darauf, dass aus logarithmischen Funktionen der Beleuchtungsstärke oder der Helligkeit Maximen der Ableitungen von den vertikalen Koordinaten in den folgenden miteinander benachbarten vertikalen Schirmschnitten oder in vertikalen Schnitten des Raumwinkels des Lichtbündels eines Reflektors berechnet werden und es werden Lagepunkte dieser Maximen bestimmt, aus der die Licht- und Schattengrenze dann festgesetzt wird, und dass eine Approximation der wahren Gestalt der Licht- und Schattengrenze (**1**) zu der erforderlichen Gestalt der gebrochenen Zweiabschnittslinie (**2**) durch eine Annahme der Mittlerwerte vertikaler Punktkoordinate (**1**) der wahren Licht- und Schattengrenze auf horizontale und schräge Abschnitte geführt wird und nachfolgend eine Selektion der Punkte auf iterationsweise und eine Annahme der Mittlerwerte vertikaler Koordinate von selektierten Punkten (**3**) bis zum Zeitpunkt, wann die Lage der gemittelten Abschnitte keine neue Werte mehr annimmt, wobei eine Selektion der Punkte (**3**) nach dem Kriterium ihrer vertikalen Strecke von gemittelten Abschnitten geführt wird.

2. Eine Art nach Anspruch 1, **dadurch kennengezeichnet, dass** eine Regelmäßigkeit der Gestalt der wahren Licht- und Schattengrenze (**1**) nach Kriterium ihrer Prozentanteil an einem angenommenen Toleranzfeld (**4**), das mit zwei parallelen Linien zur approximierten Licht- und Schattengrenze (**2**) begrenzt wird, beurteilt wird.

3. Eine Art nach Anspruch 1 **dadurch kennengezeichnet, dass** eine Lage des Lichtflecks entweder aufgrund der Lage des Mittelpunktes des Rechtecks, das von vier Tangenten zur Isoluxe der Verteilung der Beleuchtungsstärke oder der Isokandele der Helligkeit oder auch aufgrund eines geometrischen Mittelpunktes einer Figur bestimmt wird, die von der Isoluxe oder Isokandele gebildet wurde.

## Revendications

1. Le mode du contrôle des caractéristiques lumineuses et de la disposition de l'éclairage du projecteur d'automobile, où le faisceau d'eclairage sortant du projecteur examiné est projecté par un système optique sur un écran, en obtenant l'image optique avec une tache lumineuse visible et avec une limite entre la lumière et l'ombre où la répartition de la luminance de l'image optique obtenue sur l'écran se transforme en signaux électriques avec les caractéristiques du signal vidéo, ceux-ci étant soumis au traitement électronique et transformés en répartition bisegmentaire de l'éclairement énergetique ou en répartition bisegmentaire de l'intensité lumineuse de la lumière du projecteur et ensuite, des répartitions de l'éclairement énergétique ou de l'intensité lumineuse ainsi obtenues on détermine, de manière mathématique, la forme et la position réelles et puis linéaires de la limite entre la lumière et l'ombre où la position réelle de la tache lumineuse et les résultats obtenus sont comparés avec la forme et la position des étalons fixés et il **est caractéristique par** le fait que l'opération de la transformation de l'image optique en répartitions de l'éclairement énergétique et de l'intensité lumineuse est répetée de façon itérative, en changeant chaque fois la sensibilité du tube transformateur de l'image et en composant ensemble les fragments des répartitions du pouvoir séparateur rélatif exigé jusqu'à ce qu'on obtienne le pouvoir séparateur rélatif exigé de la valeur de l'éclairement énergétique ou de l'intensité lumineuse sur tout l'espace de l'écran et des répartitions de l'éclairement énergétique ou de l'intensité lumineuse ainsi obtenues on détermine la limite entre la lumière et l'ombre, tout d'abord réelle **(1)**, de manière mathématique et puis bisegmentaire **(2)**, par l'approximation, et aussi la position de celle-ci et de même la place réelle de la tache noire et en effet, la détermination mathématique de la limite réelle entre la lumière et l'ombre consiste à ce qu'on calcule, en sortant des fonctions logarythmiques de la répartition de l'éclairement énergétique ou de l'intensité lumineuse, les maximum des dérivées à la coordonnée verticale dans les sections de l'écran suivantes et awoisinées ou dans les sections verticales de l'angle solide du faisceau d'éclairage du projecteur et on détermine des points de situation de ces maximum dont on détermine ensuite la limite entre la lumière et l'ombre et que l'approximation de la forme réelle de la limite de la lumière et l'ombre **(1)** et de la forme exigée de la ligne polygonale bisegmentaire **(2)** est dirigée en prenant la moyenne des coordonnées verticales des points **(1)** de la limite réelle entre la lumière et l'ombre aux segments horizontal et oblique et puis en selectionnant ces points de manière itérative et en prenant la moyenne des coordonnées verticales de ces points **(3)** jusqu'à ce que la position des segments pris en moyenne ne prenne plus de nouvelles valeurs, en ajoutant que le selectionnement des points **(3)** est effectué selon le critère de leur distance verticale des segments pris en moyenne.

2. Le mode selon la revendictation 1, **caractéristique par** le fait que la regularité de la forme de la limite réelle entre la lumiére et l'ombre **(1)** est estimée selon le critère de sa participation de pourcentage dans une zone de tolérance admise **(4),** limitée par deux lignes parallèles à la limite approximée entre la lumière et l'ombre **(2).**

3. Le mode selon la revendictation 1, **caractéristique par** le fait que la position de la tache lumineuse est déterminee ou à la base de la position du centre du rectangle construit de quatre lignes tangentes à la courbe isophote d'éclairement ou à celle d'intensité lumineuse, ou à la base du centre géometrique de la figure créée par la courbe isophote d'éclairement ou celle d'intensité lumineuse.
